# EUROPEAN PATENT APPLICATION

(11) **EP 4 230 037 A1**
(43) Date of publication of application: **23.08.2023**
(21) Application number: 22157516.0
(22) Date of filing: 18.02.2022
(51) Int. Cl.: A01M 7/00, A01M 21/04

(54) **MULTI-DEVICE AGRICULTURAL FIELD TREATMENT**

(71) Applicant: BASF Agro Trademarks GmbH, 67063 Ludwigshafen am Rhein (DE)
(72) Inventor: The designation of the inventor has not yet been filed
(74) Representative: BASF IP Association

(57) **Abstract**

The present disclosure relates to a multi-device treatment of an agricultural field. Proposed is a computer-implemented method for treating an agricultural field (10). The method comprises the step of analyzing field data (S120), monitored as a first treatment device (100) traverses the field (S110), to determine whether the field (10) at a certain field location (10a) has a field condition which is treatable with a first device configuration of the first treatment device (100). If it is determined that the field at the certain field location associated with the respective field condition is treatable with the first device configuration of the first treatment device (100), the first treatment device (100) is controlled (S130) to treat the field at the certain field location (10a). Otherwise, if it is determined that the field at the certain field location (10a) associated with the respective field condition is not treatable with the first device configuration of the first treatment device (100), the certain field location (10a) is provided (S140) for at least one further, second treatment device (200) having a second device configuration that is different to the first device configuration and capable of treating the field at the certain field location.

## Description

### TECHNICAL FIELD

The present disclosure relates to a computer-implemented method for treating an agricultural field, a first treatment device for treating an agricultural field, a second treatment device for treating an agricultural field, and a computer program element.

### TECHNICAL BACKGROUND

The general background of this disclosure is the treatment of plants in an agricultural field, which may be an agricultural field, a greenhouse, or the like. The treatment of plants, such as the cultivated crops, may also comprise treatment of weeds present in the agricultural field, treatment of insects present in the agricultural field or treatment of pathogens present in the agricultural field.

To make farming more sustainable and reduce environmental impact precision farming technology is being developed. Here a semi-automated or fully automated plant treatment device, such as a drone, a robot, a ground-operated smart sprayer, or the like, may be configured to treat weeds, insects and/or the pathogens in the agricultural field based on ecological and economical rules. The technological developments in the field of drones or in robotics enable new treatment schemes for farmers.

In practice, a field to be treated may have different field conditions from field section to field section, i.e. a diversity of field conditions. For example, different field sections or locations within the field may host or show different weeds, insects and/or pathogens that cannot be treated uniformly, i.e. with on-board resources alone, or be subject to different restrictions, such as spatial, geometric, legal, etc., which also do not allow uniform treatment across the entire field, i.e. across all field sections.

For example, US 2017/0258005 A1 describes a system comprising a mobile-monitoring device and a mobile-deployment device. The mobile-monitoring device and/or a static monitoring device monitors target plants and a central computer identifies what plants to target. Based on the information, the central computer determines that the targets plants require treatment. A message is then sent to the mobile-deployment device to treat the target plants. A drawback is that the mobile-deployment device is only configured to specifically treat the target plants and cannot easily respond to different field conditions, while the mobile-monitoring device is not capable for treatment.

US 2019/0166752 A1 describes a system that comprises a monitoring unmanned aerial vehicle and an agricultural aircraft. an aerial application task management server positions monitoring unmanned aerial vehicle at an altitude above agricultural aircraft to monitor performance of agricultural aircraft via data received from an imaging sensor of the monitoring unmanned aerial vehicle while agricultural aircraft performs an aerial application task by using a product applicator apparatus to deploy a product over a target area. Again, a drawback is that the agricultural aircraft operates with a specific configuration and cannot easily respond to different field conditions, while the monitoring unmanned aerial vehicle is not capable for treatment.

US 2019/0116726 A1 describes an agricultural sprayer having a tank storing material to be sprayed and having mounted a set of unmanned aerial vehicles (UAVs). The UAVs comprise sensors and are positioned in monitor areas so as to detect an overspray of the material sprayed by the agricultural sprayer. Again, a drawback is that the agricultural sprayer is operated with a specific configuration and cannot easily respond to different field conditions, while the UAVs are not capable for treatment.

Therefore, there may still be a need to better address the diversity of field conditions.

### SUMMARY OF THE INVENTION

It is an object of the present invention to improve addressing a diversity of field conditions. The object of the present invention is solved by the subject matter of the independent claims, wherein further embodiments are incorporated in the dependent claims.

In a first aspect, there is provided a computer-implemented method for treating an agricultural field.

The method comprises the step of analyzing field data, monitored as a first treatment device traverses the field, to determine whether the field at a certain field location has a field condition which is treatable with a first device configuration of the first treatment device.

Thereby, if it is determined that the field at the certain field location associated with the respective field condition is treatable with the first device configuration of the first treatment device, the first treatment device is controlled to treat the field at the certain field location.

Otherwise, if it is determined that the field at the certain field location associated with the respective field condition is not treatable with the first device configuration of the first treatment device, the certain field location is provided to or for at least one further, second treatment device having a second device configuration that is different to the first device configuration and capable of treating the field at the certain field location.

In this way, the diversity of the field or field conditions, i.e., the different field conditiondependent requirements for the treatment of the field, can be better addressed, since those certain field locations that are not treatable only by the first treatment device are effectively treated by the second treatment device. Further, the treatment of the field can be more efficient, because it may be determined, while the first treatment device is still traversing the field, that the first device configuration is not suitable for the treatment of the certain field location having the respective field condition, and thereupon the certain field location is provided as information, trigger, instruction, or the like, for treatment to the second treatment device, which is at least more suitable due to its second device configuration. That is, the certain field location can be treated promptly by the second treatment device while the first treatment device is still traversing the field and/or treating a number of other field locations. In other words, the second treatment device can substitute for the treatment where the first treatment device, due to its device configuration, is not suitable for treatment. The method also enables a more sustainable treatment of the field, because besides locations within the field non-treated by the first treatment device, i.e. left overs, also the certain field location that is determined non-treatable with the first device configuration can be handed over to be treated by the second treatment device. This means that the certain field location is then only treated by the second treatment device and not by the first treatment device, which avoids double treatment.

In yet other words, a multi-device treatment of an agricultural field is proposed herein in which, depending on the individual device configuration, the most suitable treatment device is used to treat the certain field location. As used herein, the first treatment device may also be referred to as primary treatment device, since it treats the predominant portion of the field at certain field locations. Likewise, the second treatment device may also be referred to as secondary treatment device, since it treats a smaller portion of the field compared to the first treatment device. It is noted that in principle both the first treatment device and the second treatment device are configured for treatment of the field and not only for monitoring, but at least in part have a device configuration different from each other, particularly in terms of treatment technique. For example, the first treatment device may be equipped with or configured for a first treatment technique and/or product, which may contained in a tank of the first treatment device, that may not necessarily cover all field conditions to be treated by the first treatment device, so that unexpected weeds or resistant weeds, an edge strip of the field, or other field conditions cannot be treated by the first treatment device. For instance, the first treatment device may carry a tank mix that is not effective against resistant weeds, certain weed classes to be expected on the field or weed classes that should undergo a different treatment mechanism than spraying, e.g. mechanical treatment or the like. As a consequence, certain weeds may not be controlled and classified as left overs. These not controlled weeds can be identified immediately after a treatment or even without any treatment by using the first treatment device.

It is noted that the first treatment device may carry the at least one second treatment device onboard, i.e. piggyback and transport it, until the at least one second treatment device - in particular instead of the first treatment device - is instructed to treat the field at the certain field location due to its at least more suitable second device configuration. Also, two or more second treatment device may be carried by the first treatment device. The first treatment device may comprise, for example, a holder, docking station or the like adapted to hold the second treatment device before or after its operation. Alternatively or additionally, the at least one second treatment device may start its operation from a place remote to the first treatment device, i.e. a place which is not at or on the first treatment device, such as a hub, base, or the like, for one or more second treatment devices. It is noted that the first treatment device is largescale in terms of its external dimensions, while the second treatment device is small-scale compared to the first treatment device.

Further, it is noted that the second treatment device may be instructed to treat the field at the certain field location even if it is not ideally suited to treat it due to its second device configuration, but is at least better suited to do so than the first treatment device with its first device configuration. For example, the first device configuration and the second device configuration, which may be known from or may be stored in one or more data sets, a database, a look-up table, or the like, may be selected for treatment of the certain field location, for example, based on an evaluation, such as scoring and/or a weighting against one another. In this way, the most suitable device configuration can be taken into account and the corresponding treatment device can be instructed to treat the certain field location.

As used herein, field conditions within a field, where a treatment area of the first and/or second treatment device can also be across two or more fields, can differ from each other in many ways. In other words, the term field condition may be understood as, for example, vegetationdependent, infestation-dependent, location-dependent, space-dependent, resolution-dependent, or the like. For example, field conditions may be location-based, where, for example, it may not be permissible to apply a particular pesticide or herbicide, or any chemical product at all, to a so-called buffer strip or marginal strip of a field, which is a marginal area on fields that is cultivated without the use of herbicides and pesticides, in some jurisdictions. In this case, the second treatment device with its other, second device configuration can be controlled specifically to this marginal strip in order to apply a treatment technique there that is suitable for the location, e.g. permitted by law. In addition, field conditions may also vary due to different weed growth or different infestations of insects, pests, pathogens, etc. Further, the first and second treatment devices may differ in their maneuverability, treatment accuracy, treatment resolution, i.e., the size of the field area treated by their treatment unit, or the like. In this case, a smaller area of the field can be treated by the smaller and/or more maneuverable treatment device with higher treatment resolution, rather than too large an area by the more cumbersome treatment device. It is also possible that the second treatment device is configured with a different product for field treatment and/or a different treatment technique and is therefore controlled to treat the certain field location.

As used herein, the term treatment device may be understood as or may comprise any device configured to treat an agricultural field. The treatment device may be configured to traverse the agricultural field. The treatment device may be a ground vehicle, which either has its own drive or is towed by a towing vehicle, an air vehicle, a rail vehicle, a robot, an aircraft, an unmanned aerial vehicle (UAV), a drone, or the like. The treatment device may by equipped with one or more treatment unit(s) and/or one or more monitoring unit(s), e.g. detection means, sensors, or the like. The treatment device may be configured to collect field data via the treatment and/or monitoring unit. The treatment device may be configured to sense field data of the agricultural field via the monitoring unit. The treatment device may be configured to treat the agricultural field via the treatment unit. Treatment unit(s) may be operated based on monitoring signals provided by the monitoring unit(s) of the treatment device. The treatment device may comprise a communication unit for connectivity. Via the communication unit the treatment device may be configured to provide, receive or send field data, to provide, send or receive operation data and/or to provide, send or receive operation data, e.g. in form of data packets, messages, etc.

The term treatment may be understood broadly as and may relate to any treatment for the cultivation of plants, crops, etc., in agriculture. Treatment may include any treatment to be conducted during a season on an agricultural field such as seeding, applying products, harvesting etc. Further, the term treatment may comprise providing a treatment product, which may be understood broadly and may refer to any object or material useful for the treatment. In the context of the present disclosure, the term treatment product may include:
- Chemical products such as fungicide, herbicide, insecticide, acaricide, molluscicide, nematicide, avicide, pesticide, rodenticide, repellant, bactericide, biocide, safener, plant growth regulator, urease inhibitor, nitrification inhibitor, denitrification inhibitor, or any combination thereof.
- Biological products such as microorganisms useful as fungicide (biofungicide), herbicide (bioherbicide), insecticide (bioinsecticide), acaricide (bioacaricide), molluscicide (biomolluscicide), nematicide (bionematicide), avicide, piscicide, rodenticide, repellant, bactericide, biocide, safener, plant growth regulator, urease inhibitor, nitrification inhibitor, denitrification inhibitor, or any combination thereof.
- Fertilizer and nutrient
- Seed and seedling.
- Water, and
- any combination thereof.
- It is also possible that the term treatment comprises a treatment mechanism, such as mechanical treatment, e.g. weeding or the like, for example, using a weeder, knife, rake, etc.
- Targeted burning can also be used as a treatment technique or treatment mechanism.

As used herein, the term device configuration may be understood that the first and/or second treatment device carries, for example, on-board equipment that allows for a particular treatment of the field, for example, using one or more of the treatment mechanisms, treatment techniques and/or treatment products described above. Further, device configuration may also be understood to mean that the first or second treatment device has a certain treatment resolution, i.e., is configured to treat at least a certain area size with its treatment unit or can only treat up to a certain area size, has a certain maneuverability, i.e., is less or more cumbersome, or the like.

Field data may be understood broadly and may comprise any data that may be obtained by the first and/or second treatment device. Field data may be obtained from the treatment unit and/or the monitoring unit of the treatment device. Field data may comprise measured data obtained by the treatment device. Field data may comprise monitoring unit data configured to control or for controlling the monitoring unit of the treatment device. Field data may comprise treatment unit data configured to control or for controlling the treatment unit of the treatment device. Field data may comprise data from which a field condition on the agricultural field may be derived. Field data may comprise data related to an treatment and/or monitoring operation of the treatment device. Field data may comprise data from which a monitoring or treatment status of the at least one section may be derived. Field data may comprise image data, spectral data, section data based on which sections may be analyzed or sections may be flagged with e.g. a monitoring or a treatment status, crop data, weed data, soil data, geographical data, trajectory data of the treatment device, measured environmental data (e.g. humidity, airflow, temperature, and sun radiation), and treatment data relating to the treatment operation. The field data may be associated with a section such as location or position in the agricultural field. Field data may be section specific such as location or position specific data associated with a specific section such as location or position in the agricultural field.

Further, as used herein, providing the certain field location may comprise providing, e.g., transmitting, one or more data packets, a message, or the like, via communication interfaces of the first and/or second treatment device and/or an intermediate device, such as a server, a cloud, and the like.

The term agricultural field may be understood broadly and may refer to an agricultural field to be treated. The agricultural field may be any plant or crop cultivation area, such as a farming field, a greenhouse, or the like. It may also include any area to be treated such as a rail way, a street side stipes or the like. A plant may be a crop, a weed, a volunteer plant, a crop from a previous growing season, a beneficial plant or any other plant present on the agricultural field. The agricultural field may be identified through its geographical location or geo-referenced location data. A reference coordinate, a size and/or a shape may be used to further specify the agricultural field. The agricultural field may be identified through a reference coordinate and a field boundary.

The term certain field location of the agricultural field is to be understood broadly in the present case and may relate to at least one position or location on the agricultural field. The certain field location may also relate to a section and/or zone of the agricultural field including multiple positions or locations on the agricultural field. The section, e.g. the zone, may relate to multiple positions or locations forming a contiguous area of the agricultural field. The certain field location may relate to distributed patches of the agricultural field multiple positions or locations on the agricultural field indicating a common field condition. The certain field location may be analyzed indicating the field condition of the section. The certain field location may include one or more position(s) or location(s) on the agricultural field flagged with one or more flags indicating the field condition. The agricultural field may comprise a plurality of certain field location, which may have different sizes, field conditions etc. The certain field location may be related to or identified by field data, in particular field conditions. The certain field location may be flagged and/or identified via a location identifier. The certain field location may be identified through its geographical location or geo-referenced location data. A reference coordinate, a size and/or a shape may be used to further specify the section. The certain field location may be of sub-field resolution. The certain field location may include space resolutions in the range of multiple hundred meters to a couple of millimeters, preferred a couple of meters to a couple of centimeters and more preferred multiple centimeters e.g. in the range of 1-300 cm, in the range of 10 to 200 cm, or in the range of 20 to 150 cm. The certain field location refers to a sub-area or a geographical location or location coordinate of a sub-area of the agricultural field.

According to an embodiment, the method may further comprise providing control data, generated based on the certain field location, for the second treatment device to guide the second treatment device to the certain field location to be treated. For example, providing the certain field location may comprise providing corresponding control data to the second treatment device. can be used to instruct the second treatment device to target the certain field location and to perform the treatment of the field at that location. Thus, not only the mere information where the certain field condition is located can be provided, but also on which way it can be reached, including e.g. navigation data as guidance.

In an embodiment, multiple field locations having a field condition for which the first treatment device is not configured may be determined, and the control data for the second treatment device may be generated with a trajectory directing to the multiple locations one after the other. This means that several certain field locations can also be collected and then be addressed in a bundle at a desired point in time. This can make it possible, for example, that the second treatment device does not have to head for a single certain field location each time, which would require a start and a return, e.g. a landing in the case of an aerial vehicle, for each individual certain field location, but only has to complete the start phase and the return phase once.

According to an embodiment, the control data may be transmitted directly from the first treatment device to the second treatment device. For example, the first treatment device may comprise an on-board computer, microcomputer, chip, FPGA or the like configured to determine the control data. This is particularly advantageous because no data connection to an intermediate entity, such as a server, a cloud or the like, is necessary to have the control data determined and/or calculated there. For example, it is also possible that the second treatment device is transported, e.g. carried, by the first treatment device, whereby the first treatment device and the second treatment device may already form a system for treating the field, without at least a continuous data connection to an intermediate entity.

In an embodiment, the control data may be provided and/or transmitted to the second treatment device from the first treatment device via a server or computing cloud. Alternatively, the first treatment device may send or, more generally, provide the certain field condition to the server or cloud without already determined control data. For example, communication can be done via the path first treatment device --> server or cloud --> second treatment device. In this case, there is no need to provide a direct communication path from the first treatment device to the second treatment device. In this case, the first and second treatment device and the server or could may form a system for treatment.

According to an embodiment, wherein monitoring of the field in the field data is carried out by the first treatment device. This means that monitoring can take place during the treatment operation of the first treatment device itself and the substitute treatment by the second treatment device can still be initiated during this time. For example, the first treatment device may traverse through the field and its one or more monitoring units capture images. The images may then be analyzed by an image analysis algorithm detecting the field condition(s). The image analysis algorithm may be provided for analysis on-board the first treatment device or in the server or cloud, or by a combination thereof. The field condition detected from the image analysis may be classified based on knowledge about the first and/or second device configuration, which can be provided in a corresponding data set, database, look-up table, or the like, and/or a matching of field condition and device configuration.

In an embodiment, analyzing the field data may be carried out on-board by the first treatment device. In this way, no other entity is needed for data analysis, but only an on-board computer or the like is used, so that the first and second treatment devices alone may form a system for treatment.

According to an embodiment, wherein analyzing the field data may be carried out by a server or computing cloud to which the field data is provided, e.g. transmitted. In this way, on-board resources, such as an on-board computer, can be conserved or kept to a minimum, since the server or cloud performs at least some of the computational work.

In an embodiment, the certain field location may be associated with a second device identifier to address a certain second treatment device among multiple second treatment devices. For example, knowledge about two or more second treatment devices can be available, e.g. stored, with each second treatment device being assigned its own second device identifier. The respective second treatment devices may differ from each other with regard to their device configuration. Thus, treatment can also be carried out for more than two certain field locations by a suitable second treatment device, by addressing the most suitable second treatment device by its respective second device identifier.

In a second aspect, there is provided a first treatment device for treating an agricultural field.

The first treatment device comprises one or more monitoring units configured to monitor the field in field data when the first treatment device traverses the field.

The first treatment device further comprises a control unit configured to analyze the field data to determine whether the field at a certain field location has a field condition for which the first treatment device is configured to treat, one or more treatment units, and a first communication interface.

Thereby, the control unit is further configured to control treatment of the field at the certain field location using the one or more treatment units, if it is determined that the field at the certain field location associated with the respective field condition is treatable with the first device configuration of the first treatment device, and to control the first communication interface to provide the certain field location, if it is determined that the field at the certain field location associated with the respective field condition is not treatable with the first device configuration of the first treatment device.

The first communication interface can, for example, be configured for wired or wireless communication, such as by means of WLAN, mobile communications or another radio transmission technology.

It is noted that the first treatment device of the second aspect may correspond to that referred to with regard to the first aspect above, and reference is made to the above-described embodiments, examples and explanation of technical effects, since these also apply to the second aspect.

According to an embodiment, the first treatment device may be a spray device, preferably operated on the ground, and wherein the one or more treatment units are configured as nozzles connected to at least one tank. For example, it can also be a trailer that can be towed by a towing vehicle, such as a tractor or the like. As described above, the first treatment device has a first device configuration, including, but not limted to, one or more of a tank configuration, e.g. a number of tanks and/or a specified or different specified products for treatment, a maneuverability, a treatment resolution. This allows the first treatment device to treat a portion of the field, but is still set up to provide at least the certain field location to the second treatment device.

In an embodiment, the first treatment device may comprise at least one holder, which may comprise a docking and/or charging station, a hub, or the like, configured to carry at least one further, second treatment device, and wherein the communication interface is configured to communicate with the second treatment device and/or a server or cloud. In this way, the first treatment device may carry the at least one second treatment device, and may also communicate with the second treatment device. The first and second treatment devices can thus form a system for treating the field, and the system can optionally include a server or cloud.

In a third aspect, there is provided a second treatment device for treating an agricultural field.

The second treatment device comprises a second communication interface configured to receive a certain field location from a first treatment device according to the first and/or second aspect.

The second treatment device further comprises a treatment mechanism configured to treat the field, and a control unit configured to guide the second treatment device to the received certain field location and to control the treatment mechanism.

It is noted that the second treatment device of the third aspect may correspond to that referred to with regard to the first and/or second aspect above, and reference is made to the above-described embodiments, examples and explanation of technical effects, since these also apply to the third aspect.

For example, the second treatment device may comprise one or more treatment mechanisms, which may be mechanical, chemical, or electrical. For example, the second treatment device may include a cutting device, a tank device, a weeding device, a burning device, etc., or a combination thereof.

According to an embodiment, the second treatment device is a ground robot or an unmanned aerial vehicle, drone or the like. For example, the second treatment device may be configured, e.g. by a corresponding, i.e. complementary with the first treatment device, housing design, to be carried by and/or mounted to the first treatment device of the first and/or second aspect.

According to a fourth aspect, there is provided a system for treating an agricultural field. The system comprises a first treatment device according to the first or second aspect, and a second treatment device according to the first or third aspect. Optionally, the second treatment device is carried by the first treatment device.

In this way, the system enables targeted treatment with the second treatment device of one or more certain field locations that cannot be treated with the first treatment device, due to limitations that are present for the first treatment device but not, or at least not to the same extent, for the second treatment device. The latter suitability or unsuitability can be determined by matching a respective device configuration with the requirements for and/or restriction on treatment of the certain field location under consideration.

According to a fifth aspect, there is provided a computer program element, which when executed by a processor is configured to carry out the method of the first aspect, and/or to control a first treatment device according to the first and/or second aspect, and/or to control a second treatment device according to the first and/or third aspect, and/or to control a system according to the fourth aspect.

It is noted that the computer program may comprise instructions, which when executed by a processor, a computer or the like, and/or by one or more of the above treatment devices and system, cause the treatment device(s) or system to carry out the above embodiments. Therefore, reference is made to the above-described embodiments, examples and explanation of technical effects, since these also apply to the third aspect.

It is noted that embodiments of the invention are described with reference to different subjectmatters. In particular, some embodiments are described with reference to method-type claims whereas other embodiments are described with reference to the device-type or system-type claims. However, a person skilled in the art will gather from the above and the following description that, unless otherwise notified, in addition to any combination of features belonging to one type of subject-matter also any combination between features relating to different subject-matter is considered to be disclosed with this application. Further, all features can be combined providing synergetic effects that are more than the simple summation of the features.

The system, treatment devices and computer elements disclosed herein may further be configured to execute the methods described above. The system may be configured to provide operation data via a cloud environment or a ground station e.g. in a centralized architecture and/or directly from treatment device to treatment device e.g. in a decentralized architecture. The system and/or treatment devices may be configured to analyse field data and to provide the result of such analysis via the cloud environment or the ground station e.g. in a centralized architecture and/or via any treatment device e.g. in a decentralized architecture. The systems may be configured to select a suitable second treatment device via the cloud environment or the ground station e.g. in a centralized architecture and/or via any treatment device e.g. in a decentralized architecture. The system may be configured to determine and/or provide operation data based on a mission schedule via the cloud environment or the ground station e.g. in a centralized architecture and/or directly via any treatment device e.g. in a decentralized architecture. The system and/or treatment devices may be configured to dynamically adjust upon providing the operation data the number of first treatment device(s) and/or second treatment device(s) used for treating the agricultural field.

### BRIEF DESCRIPTION OF THE DRAWINGS

In the following, the present disclosure is further described with reference to the enclosed figures:
- Fig. 1: shows a system for treating an agricultural field, comprising a first treatment device and a second treatment device, according to an exemplary embodiment.
- Fig. 2: illustrates a system for treating an agricultural field, comprising a first treatment device and a second treatment device, with details of the first treatment device according to an exemplary embodiment.
- Fig. 3: illustrates a system for treating an agricultural field, comprising a first treatment device and a second treatment device, with details of the second treatment device according to an exemplary embodiment.
- Fig. 4: illustrates a system for treating an agricultural field, comprising a first treatment device and a second treatment device, with details of the second treatment device according to an exemplary embodiment.
- Fig. 5: illustrates in a block diagram internal components of a first treatment device according to an exemplary embodiment.
- Fig. 6: illustrates in a flow diagram a method for treating the agricultural field according to an exemplary embodiment.
- Fig. 7: illustrates an exemplary data flow diagram of a method for treating an agricultural field according to an exemplary embodiment.
- Fig. 8: illustrates an exemplary data flow diagram of a method for treating an agricultural field according to an exemplary embodiment.

### DETAILED DESCRIPTION

The disclosure is based on the finding that agricultural fields comprise heterogeneous field conditions (e.g. plant, weed, soil, legal restrictions, etc.) distributed over the entire agricultural field. These field conditions vary and therefore not completely known before a treatment device treats the agricultural field. By monitoring with means of a treatment device during a treatment process of an agricultural field, these specific field conditions of the agricultural field are at least partly revealed. The collected information about these specific field conditions serves to beneficially allow to instruct only that treatment device among at least two thereof which has a device configuration best suitable for the specific field condition. By doing so, it is possible to (re-)act on different field conditions in the agricultural field with the best suitable device configuration. This allows a device configuration driven treatment of the agricultural field with multiple of treatment devices and advantageously increases the treatment efficiency and/or accuracy.

The following embodiments are mere examples for implementing the system, treatment devices, method or the computer elements disclosed herein and shall not be considered limiting.

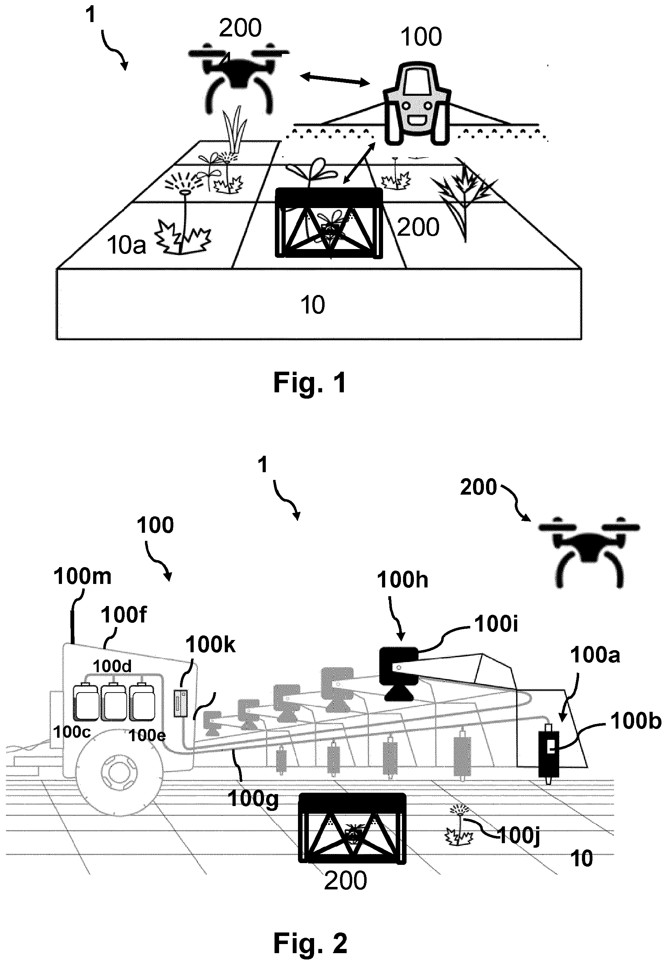

Fig. 1 shows an exemplary embodiment of a system 1 for treating an agricultural field 10, comprising a plurality of field sections and/or certain field locations 10a, wherein the system 1 comprises a first treatment device 100 and at least one second treatment device 200. It is noted that the at least one second treatment device 200 may be carried by the first treatment device 100, and may be capable to be mounted on the first treatment device 100. In at least some embodiments, the first treatment device exists only once, and there are one or more second treatment devices, even multiple second treatment devices that differ from each other. The first treatment device 100 is configured to monitor and treat the field 10, and is provided as e.g. a ground-operated spraying device. It may be, for example, tractor-based or towed, with or without its own propulsion. The first treatment device 100 has a first device configuration, which will be described in more detail below and which allows to apply treatment to the field 10 or to one or more subareas thereof.

The first treatment device 100 is configured to monitor the field 10a in field data when and/or while the first treatment device traverses the field 10. Further, the first treatment device 100 is configured to analyze the field data to determine whether the field at the certain field location 10a has a field condition for which the first treatment device 100 is configured to treat. For example, as the first treatment device 100, as shown in Fig. 1, is built larger than the second treatment device(s) 200, it may, for example, be less maneuverable, have too large or coarse a treatment resolution, i.e., treat only large(r) areas, has a treatment mechanism that does not fit, etc. Based on an analyses, e.g. classification and/or using knowledge of the device configuration, or the like, it can thus determine whether the certain field location 10a can be treated by onboard means or not.

Further, the first treatment device 100 is further configured to control treatment of the field 10 at the certain field location 10a, if it is determined that the field at the certain field location 10a associated with the respective field condition is treatable with the first device configuration of the first treatment device, and, otherwise, to control the first communication interface to provide the certain field location, if it is determined that the field 10 at the certain field location 10a associated with the respective field condition is not treatable with the first device configuration of the first treatment device 100.

The at least one second treatment device 200 is configured to monitor and/or treat the field 10, and is provided as e.g. a ground-robot or an unmanned aerial vehicle, UAV, which can be controlled autonomously by onboard computers, remotely by a pilot controller as user device 500 or partially remotely e.g. by way of initial operation data. The second treatment device 100 has a second device configuration, which will be described in more detail below. It is noted that the system 1 may comprise more than one second treatment device 200, of which there may be different types, such as a mix of ground-based robot(s) or UAV(s), which may have second device configurations different to each other.

If, as described above, it is determined that the field 10 at the certain field location 10a associated with the respective field condition is not treatable with the first device configuration of the first treatment device 100, the certain field location 10a is provided, e.g. as data, a dataset, or the like, to the at least one treatment device 200, to instruct the at least one treatment device 200 to treat the field 10 at the certain field location 10a.

Fig. 2 shows the system 1 with the first treatment device 100 having an exemplary first device configuration. It is noted that Fig. 2 is merely schematically illustrating main components, wherein the first treatment device 100 may comprise more or less components than shown. In this example, the first treatment device 100 may be releasable attached or directly mounted to or part of a tractor. In at least some embodiments, the field sprayer 100 comprises a treatment unit, which may be configured with a boom having multiple spray nozzles 100a arranged along the boom. The spray nozzles 100a may be fixed or may be attached movably along the boom in regular or irregular intervals. Each spray nozzle 100a may be arranged together with one or more, preferably separately, controllable valves 100b to regulate fluid release from the spray nozzles 100a to the field 10.

One or more tank(s) 100c, 100d, 100e are arranged in a housing 100f and are in fluid communication with the nozzles 100a through one or more fluidic lines 100g, which distribute the one or more treatment product(s) or composition ingredients like water to the spray nozzles 100a. This may include chemically active or inactive ingredients like a treatment product or mixture, individual ingredients of the treatment product or mixture, a selective or non-selective treatment product, a fungicide, ingredients of a fungicide mixture, a plant growth regulator, ingredients of a plant growth regulator mixture, water, oil, or any other treatment product. Each tank 100c, 100d, 100e may further comprise a controllable valve to regulate fluid release from the tank 100c, 100d, 100e to the fluid lines 100g.

For monitoring and/or detecting, the field sprayer comprises a detection system 100h with multiple monitoring units 100i arranged along e.g. the boom. The monitoring units 100i may be arranged fixed or movable along the boom in regular or irregular intervals. The monitoring units 100i may be configured to sense field data and to derive one or more conditions of the field 100j. The monitoring units 100i may be optical components providing images of the field 10. Suitable optical monitoring components 100i are multispectral cameras, stereo cameras, IR cameras, CCD cameras, hyperspectral cameras, ultrasonic or LIDAR (light detection and ranging system) cameras. Alternatively or additionally, the monitoring units 100i may comprise further sensors to measure humidity, light, temperature, wind or any other suitable condition on the field 10.

In at least some embodiments, the monitoring units 100i may be arranged as shown in Fig. 2 with units 100i perpendicular to the movement direction of the treatment device 100 and in front of the nozzles 100a (seen from drive direction). In the embodiment shown in Fig. 2, the monitoring units 100i are optical monitoring units 100i and each monitoring unit 100i is associated with a single nozzle 100a such that the field of view comprises or at least overlaps with the spray profile of the respective nozzle 100a once the nozzle reach the respective position. In other arrangements each monitoring unit 100i may be associated with more than one nozzle 100a or more than one monitoring units 100i may be associated with each nozzle 100a.

The monitoring units 100i, the tank valves and/or the nozzle valves 100b are communicatively coupled to a control system or control unit 100k. In the embodiment shown in Fig. 2, the control unit 100k is located in a main housing 100f and wired to the respective components. In another embodiment monitoring units 100i, the tank valves or the nozzle valves 100b may be wirelessly connected to the control unit 100k. In yet another embodiment more than one control unit 100k may be distributed in the device housing 100f and communicatively coupled to the monitoring units 100i, the tank valves or the nozzle valves 100b.

The control unit 100k may be configured to control and/or monitor the monitoring components 100i, the tank valves or the nozzle valves 100b based on a control file or operation data provided by a control file and/or following a communication control protocol. In this respect, the control unit 100k may comprise multiple electronic modules. One module for instance may be configured to control the monitoring units 100i to collect field data such as images of the field 10. A further module may be configured to analyze the collected field data such as the images to derive parameters for the tank or nozzle valve control 100b. A further module may be configured to receive the operation data to derive control data and/or a control signal. Yet further module(s) may be configured to control the drive system, the tank valves and/or nozzle valves 100b based on such derived control data or control signal.

As described above, the field sprayer 100 comprises or is communicatively coupled to the monitoring units 100i, such as image capturing devices 100i, and is configured to provide one or more images of the area of interest to the control unit 100k, e.g. as image data which can be processed by a data processing unit. It is noted that both capturing the at least one image by the monitoring unit 100i and processing the same by the control unit 100k is performed onboard or through communication means during operation of the field sprayer, i.e. in real-time. It may further be noted that any other dataset than image data from which field conditions are derivable may be used.

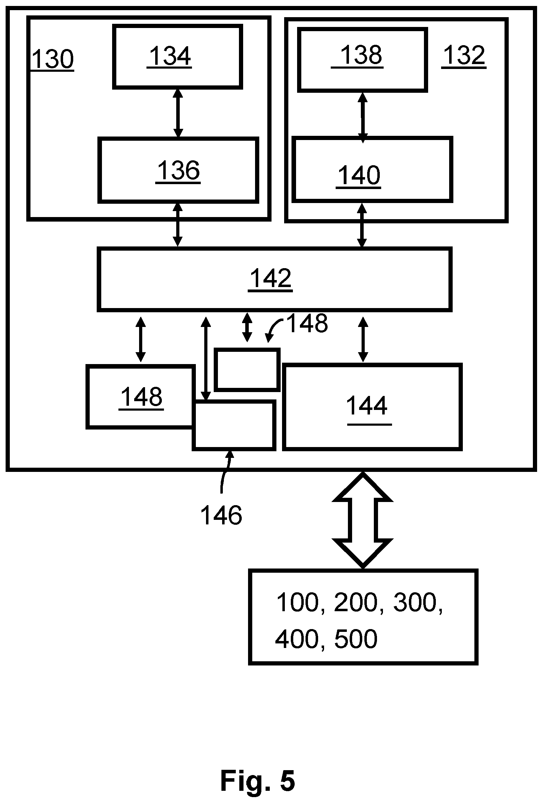

Further, the first treatment device 100 may comprise at least one holder 100m configured to carry a further, second treatment device 200. Thereby, the a communication interface 144 (see Fig. 5) may be configured to communicate with the second treatment device 200.

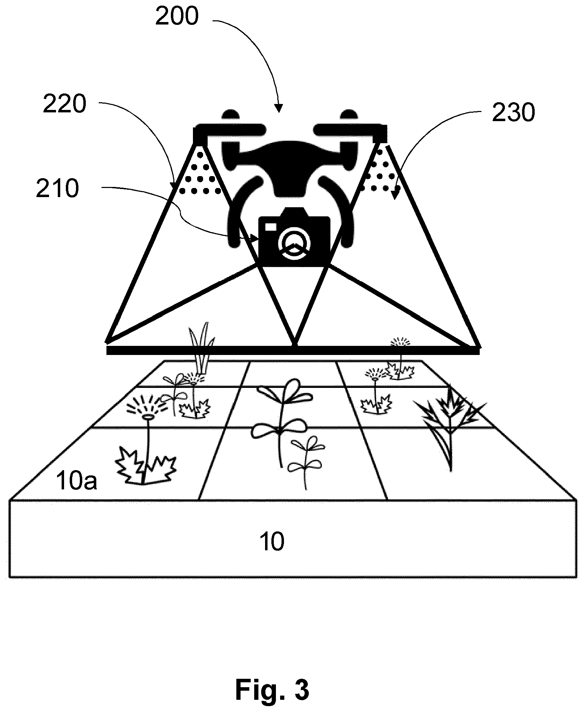

Fig. 3 shows an exemplary second device configuration of the second treatment device 200, which in this example is provided as a UAV. The second treatment device 200 shown in this example includes a camera as monitoring unit 210 for collecting field data and two spray nozzles as treatment units 220, 230 for spraying treatment product. The spray nozzles 220, 230 are in fluid connection to at least one tank carried by the second treatment device 200, i.e. in this example the UAV. Such set up allows for more efficient and targeted field treatment, since depending on the collected field data and the monitored field condition(s) the treatment units 220, 230 may be triggered to treat the field 10 and/or certain field location 10a. Both operations may be executed while the second treatment device 200 hovers over the respective certain field location 10a. In another embodiment, the second treatment device 200 does not comprise monitoring means, such as the monitoring unit 210, but only the first treatment device 100 is configured for monitoring the field 10 and/or to obtain field data. Further, in at least some embodiments, the second treatment device 200 may comprise a treatment mechanism other than a spraying mechanism. For example, the second treatment device 200 may be configured to treat the field 10 by a mechanical treatment mechanism, an electrical treatment mechanism, a flame mechanism, or another mechanism that differs from the spraying mechanism.

Preferably, the treatment mechanism of the second treatment device 200, which also contributes to the second device configuration, differs from the treatment mechanism of the first treatment device 100, in order to allow different field conditions to be treated with at least two differently configured treatment devices.

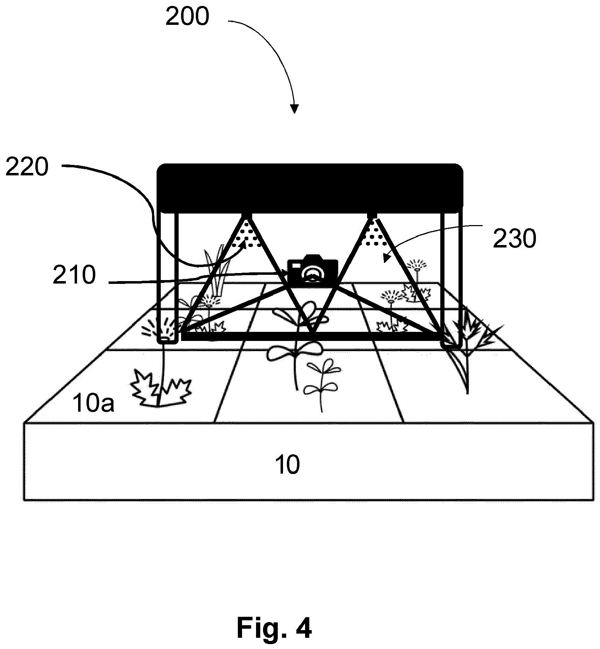

Fig. 4 shows an exemplary second device configuration of the second treatment device 200, which in this example is provided as a ground robot. In contrast to the setup of Fig. 3, the arrangement of Fig. 4 provides the second treatment device 200 as a ground robot. The robot is comparable to the UAV, but ground-based rather than air-based. Using the robot in addition to or instead of the UAV has the advantage that the robot has a stable distance to the ground and may easier to handle for ground based treatment operations like grabbing or cutting. In general, the robot may have a different, of if additionally provided, a further, device configuration that may allow a different treatment for the certain field location 10a. As shown in this example, the second treatment device 200 includes a monitoring unit 210 for collecting field data and monitoring field condition(s) and treatment units 220, 230, e.g. spray nozzles, as treatment unit for spraying treatment product. The treatment units 220, 230 are in fluid connection to at least one tank carried by the second treatment device 200.

Fig. 5 illustrates in a block diagram an example of internal components of the first treatment device 100, such as the spraying device illustrated in Figs. 1 or 2, and/or the second treatment device 200, such as the UAV or ground robot illustrated in Fig. 1, 3 or 4. It is noted that for ease of description, the internal components are described with respect to the first treatment device 100 and also apply to the second treatment device 200.

The first and/or second treatment device 100, 200 includes a treatment unit 130 including actuator(s) 134 and an actuator control 136. The actuator(s) may include engine actuators, steering actuators which may be used to maneuver the treatment device 100, 200. The actuator(s) may include treatment actuators configured to treat the field 10 and to provide field data e.g. via the actuator control 36. The actuator control 136 may include subunits such as an obtaining unit, a providing unit or a control unit.

The treatment device 100, 200 further includes a monitoring unit 132 with sensor(s) 138 and an sensor control 140. The sensor(s) 138 may include an accelerometer, a gyroscope, and a magnetometer which may be used to estimate acceleration and speed of the treatment device 100, 200. The sensor(s) 138 may include field monitoring sensor(s) configured to sense field conditions and to provide field data. The sensor control 140 may include subunits such as obtaining unit, providing unit or control unit.

The treatment device 100, 200 includes a mission controller 142 configured to control or monitor the mission of the treatment device 100, 200 on the field 10. The mission controller 142 may further include subunits such as obtaining unit, providing unit or controlling unit.

The treatment device 100, 200 also includes an onboard memory 148 for storing e.g. the mission schedule, the field data, the operation data or the like. The treatment device 100, 200 further includes a positioning system 146 configured to provide the current position of the treatment device 100, 200 such as a global positioning system (GPS) or a camera based positioning system e.g. based on optical flow. The treatment device 100, 200 further includes a power supply or fuel tank 148 including e.g. fuel or a rechargeable battery and a battery controller. The battery controller may be configured to provide a remaining battery level e.g. prior to or during mission. The treatment device 100, 200 may be provided with various levels of control ranging from fully autonomously via remotely by a pilot controller to partially remotely/autonomously e.g. by way of an initial mission schedule.

For communication with other devices such as a ground station 300 or other treatment devices 100, 200 or the cloud environment 100 the treatment device 100, 200 includes a wireless communication interface 144. The wireless communication interface 144 may be configured with one or more cellular communication circuitry or circuitries, such as 4G or 5G circuitry, or one or more short range communication circuitry(s), such as Bluetooth or ZigBee interfaces. The wireless communication interface 144 enables communication with other devices, which may also be part of a distributed system, such as other second treatment devices 200, the ground station 300, a server or cloud environment 400, or a remote controller 500. The server or cloud environment 400 access may be provided via the communication interface 144 of the treatment device 100, 200 or via a client device, such as the remote controller 500 of the treatment device 100, 200 or via the ground station 300.

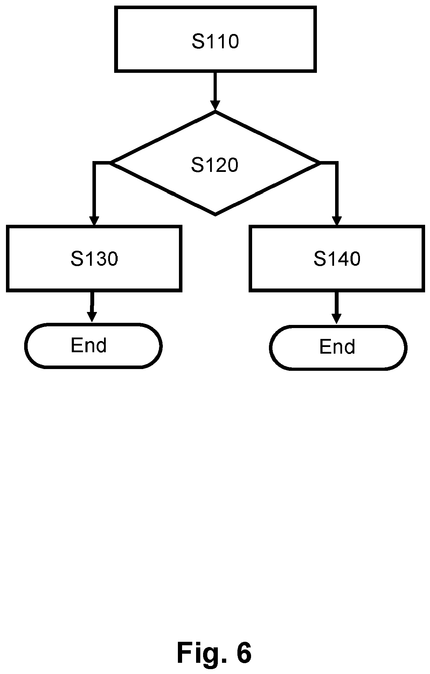

Fig. 6 illustrates in a flow diagram an exemplary method for treating the agricultural field 10. The method steps shown in Fig. 6 may be executed by the system 1, and especially by the first treatment device 100 or by the first treatment device 100 in combination with the ground station 300 and/or the cloud environment 400, and the at least one second treatment device 200.

In step S110, the first treatment device 100 starts or continues its mission. The first treatment device 100 traverses the field 10 and obtains field data for at least one section or certain field location 10a of the field 10. The field data may be obtained by the one or more monitoring unit(s) 100i, such as one or more optical sensors. Some sensor examples are a RGB camera, a hyperspectral camera, an infrared sensor, a weed sensor, a disease sensor, a soil sensor, an airflow sensor, a radar sensor, a LIDAR sensor, a LADAR sensor, a humidity sensor, or a sun radiation sensor. The monitoring unit may include one or more sensors. The field data relates to a field condition sensed by the first treatment device 100. For example, the control unit 100k is configured to control the one or more monitoring unit(s) 100i and to obtain the field data therefrom.

In step S120, the obtained field data, which is or was monitored as the first treatment device 100 traverses the field 10, is analyzed to determine whether the field 10 at the certain field location 10a has a field condition which is treatable with the first device configuration of the first treatment device 100.

In one exemplary embodiment, the analysis to determine the suitability for treatment of the first treatment device 100 and/or the second treatment device 200 is performed onboard. For example, the control unit 100k of the first treatment device 100, which obtained the field data via the one or more monitoring unit(s) 100i, is configured to analyze the collected field data, such as the images, to derive one or more parameters indicative for the field condition at the certain field location 10a therefrom. By way of example, the control unit 100k is further configured to compare, look up, classify, etc. the field condition with respect to the first device configuration of the first treatment device 100 and, optionally, to the second device configuration of the second treatment device 200 to determine whether the first device configuration and/or the second device configuration is suitable to the treat the certain field location 10a given the determined field condition.

In another embodiment, the analysis the analysis to determine the suitability for treatment of the first treatment device 100 and/or the second treatment device 200 is performed off-board, i.e. centrally, e.g. by using the ground station 300 and/or the server or cloud environment 400. For example, the control unit 100k of the first treatment device 100 controls the wireless communication interface 144 to provide, e.g. send, the obtained field data to the ground station 300 and/or the server or cloud environment 400, which are configured to receive the field data via a corresponding communication interface. This or these then analyzes the collected field data, such as the images, to derive one or more parameters indicative for the field condition at the certain field location 10a therefrom. By way of example, the ground station 300 and/or the server or cloud environment 400 is configured to compare, look up, classify, etc. the field condition with respect to the first device configuration of the first treatment device 100 and, optionally, to the second device configuration of the second treatment device 200 to determine whether the first device configuration and/or the second device configuration is suitable to the treat the certain field location 10a given the determined field condition. After the analysis, the ground station 300 and/or the server or cloud environment 400 may send, via the communication interface, the result of the analysis, to the first treatment device 100 and/or the second treatment device 200. Alternatively or additionally, the ground station 300 and/or the server or cloud environment 400 may derive, e.g. generate, control data configured to instruct the first treatment device 100 and/or the second treatment device 200 to treat the field 10 at the certain field position 10a in correspondence with the derived field condition there.

In step S130, i.e. the left branch in Fig. 6, the first treatment device 100 is controlled to treat the field 10 at the certain field location 10a, if it is determined in step S120 that the field 10 at the certain field location 10a associated with the respective field condition is treatable with the first device configuration of the first treatment device 100.

In one embodiment, control data for controlling the first treatment device 100 is derived onboard by the first treatment device 100. For example, the control unit 100k derives the control data based on the analyses in step S120 and, optionally, the determination in step S130 to control the drive system, the tank valves and/or nozzle valves 100b of the first treatment device 100 based on such derived control data.

In another embodiment, the control data for controlling the first treatment device 100 is derived off-board, i.e. centrally, e.g. by using the ground station 300 and/or the server or cloud environment 400 derives the control data based on the analyses in step S120 and, optionally, the determination in step S130, wherein the control data is configured to control the drive system, the tank valves and/or nozzle valves 100b of the first treatment device 100 based on such derived control data.

Otherwise, in step S140, i.e. the right branch in Fig. 6, namely if it is determined that the field 10 at the certain field location 10a associated with the respective field condition is not treatable with the first device configuration of the first treatment device 100, the certain field location 10a is provided for the at least one second treatment device 200 having the second device configuration that is different to the first device configuration and capable of treating the field 10 at the certain field location 10a.

In one embodiment, the certain field location 10a is provided, e.g. as location information data, directly from the first treatment device 100 to the second treatment device 200. For example, the control unit 100k is configured to control the wireless communication interface 144 to provide the certain field location 10a, so as to be directly received by the second treatment device 200, via the corresponding wireless communication interface 144. Additionally, the first treatment device may further derive, e.g. generate, and provide control data for controlling the second treatment device 200 to treat the field 10 at the certain field location 10a directly to the second treatment device 200.

In another embodiment, the certain field location 10a, e.g. as location information data, is provided to the ground station 300 and/or the server or cloud environment 400, where the control data for controlling the second treatment device 200 may be generated and then provided, e.g. via the communication interface and the corresponding communication interface 144 of the second treatment device 144, to the second treatment device 200, which is thereby instructed to treat the field at the certain field location 10a.

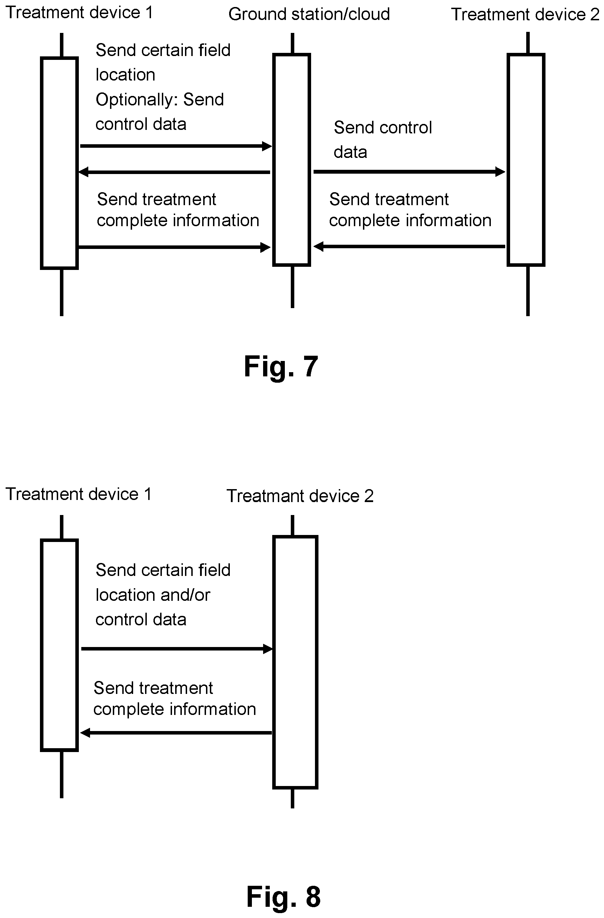

Fig. 7 illustrates an exemplary data flow diagram of an exemplary method for treating an agricultural field. In this exemplary embodiment, the first treatment device 100 collects the field data as described above and provides it to the ground station 300 and/or the server or cloud environment for further processing, particularly to derive, e.g. generate, the control data to the first treatment device 100 and/or the second treatment device 200. Multiple other embodiments using different parts of the distributed computing environment may be possible.

As a first message, the first treatment device 100 sends the field data for determining whether the first treatment system 100 with its first device configuration is suitable to treat the field 10 at the certain field location 10a to the ground station 300 and/or the server or cloud environment 400. The ground station 300 and/or the server or cloud environment 400 determines based on the field data the suitability of the first treatment device 100 and/or second treatment device 200 and generates or updates control data for controlling the first treatment device 100 and/or the second treatment device 200. The generated or updated control data is send to the first treatment device 100 and/or the second treatment device 200.

Optionally, once the treatment is completed, the first treatment device 100 and/or the second treatment device 200 may send such treatment complete information to the ground station 300 and/or the server or cloud environment 400, e.g. for updating the mission schedule tracking allocated and available treatment devices. Upon validation, the ground station 300 and/or the server or cloud environment 400 sends a return to home command, such that the second treatment device 200 stops further activity. The second treatment device 200 may then be directed back to the first treatment device 100, from which it is carried further, e.g. to the next mission.

Fig. 8 illustrates an exemplary data flow diagram of an exemplary method for treating an agricultural field. In this exemplary embodiment, the first treatment device 100 collects the field data as described above, determines, e.g. based on an analysis as described above, whether the certain field location 10a of the field 10 can be treated by itself. Fig. 8 illustrates the case that the first treatment device 100 is not configured to the treat the field at the certain field location 10a, generates the second treatment device 200.. Multiple other embodiments using different parts of the distributed computing environment may be possible.

In one embodiment, as a first message, the first treatment device 102 sends location information data indicating the certain field location 10a, which is determined to be non-treatable with the first device configuration of the first treatment device 100, to the second treatment device 200. In such embodiment, the second treatment device 200 may be configured, e.g. by a control system or control unit like the control system or control unit 100k described above, to generate control data configured to enable treatment of the certain field location 10a.

Optionally, once the treatment is completed, the second treatment device 200 may send a treatment complete information to the first treatment device 100, which in turn may instruct the second treatment device 200, e.g. by a home command, to direct back to the first treatment device 100, which then carries the second treatment device 100 again until the next mission.

In another embodiment, as a first message, the first treatment device 102 generates and send control data for controlling the second treatment device 200 to treat the field 10 at the certain field location 10a.

Optionally, once the treatment is completed, the second treatment device 200 may send a treatment complete information to the first treatment device 100, which in turn may instruct the second treatment device 200, e.g. by a home command, to direct back to the first treatment device 100, which then carries the second treatment device 100 again until the next mission.

Optionally, the system 1 may comprise multiple second treatment devices 200. In such an embodiment, the certain field location 10a and/or the control data generated on this basis is associated with a second device identifier to address a certain second treatment device 200 among the multiple second treatment devices 200. The second device configuration of the multiple second treatment device 200 may differ from each other, for example, in that one or some are ground robots and one or some are UAVs, and/or in the respective treatment mechanism, which is chemical, e.g., spraying mechanism, mechanical, electrical, or set up for flame treatment.

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at a different nodes using different equipment/data processing units.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A computer-implemented method for treating an agricultural field (10), the method comprising:
analyzing field data (S120), monitored as a first treatment device (100) traverses the field (S110), to determine whether the field (10) at a certain field location (10a) has a field condition which is treatable with a first device configuration of the first treatment device (100);
if it is determined that the field at the certain field location associated with the respective field condition is treatable with the first device configuration of the first treatment device (100), controlling (S130) the first treatment device (100) to treat the field at the certain field location (10a); and
if it is determined that the field at the certain field location (10a) associated with the respective field condition is not treatable with the first device configuration of the first treatment device (100), providing (S140) the certain field location (10a) for at least one further, second treatment device (200) having a second device configuration that is different to the first device configuration and capable of treating the field at the certain field location.

2. The method of claim 1, further comprising:
providing control data, generated based on the certain field location, for the second treatment device (200) to guide the second treatment device (100) to the certain field location (10a) to be treated.

3. The method of claim 2, wherein multiple field locations having a field condition for which the first treatment device (100) is not configured are determined, the control data for the second treatment device is generated with a trajectory directing to the multiple locations one after the other.

4. The method of claim 2 or 3, wherein the control data is transmitted directly from the first treatment device (100) to the second treatment device (200).

5. The method of claim 2 or 3, wherein the control data is transmitted to the second treatment device from the first treatment device (100) via a server or computing cloud (300).

6. The method of any one of the preceding claims, wherein monitoring of the field in the field data is carried out by the first treatment device (100).

7. The method of any one of the preceding claims, wherein analyzing the field data is carried out on-board by the first treatment device (100).

8. The method of any one of the preceding claims, wherein analyzing the field data is carried out by a server or computing cloud (300) to which the field data is provided.

9. The method of any one of the preceding claims, wherein the certain field location (10a) is associated with a second device identifier to address a certain second treatment device among multiple second treatment devices.

10. A first treatment device (100) for treating an agricultural field (10), the first treatment device comprising:
one or more monitoring units (100i) configured to monitor the field in field data when the first treatment device (100) traverses the field (10);
a control unit (100k) configured to analyze the field data to determine whether the field at a certain field location has a field condition for which the first treatment device is configured to treat;
one or more treatment units (100; and
a first communication interface (144);
wherein the control unit is further configured to:
if it is determined that the field at the certain field location associated with the respective field condition is treatable with the first device configuration of the first treatment device (100), control treatment of the field at the certain field location (10a) using the one or more treatment units; and
if it is determined that the field at the certain field location associated with the respective field condition is not treatable with the first device configuration of the first treatment device (100), control the first communication interface (144) to provide the certain field location (10a).

11. The first treatment device of claim 10, wherein the first treatment device is a spray device, preferably operated on the ground, and wherein the one or more treatment units are configured as nozzles (100a) connected to at least one tank (100c).

12. The first treatment device of claim 10 or 11, wherein the first treatment device (100) comprises at least one holder (100m) configured to carry a further, second treatment device (200), and wherein the communication interface (144) is configured to communicate with the second treatment device (200).

13. A second treatment device (200) for treating an agricultural field (10), the second treatment device (200) comprising:
a second communication interface (144) configured to receive a certain field location from a first treatment device (100) according to any one of claims 10 to 12;
a treatment mechanism (220, 230) configured to treat the field; and
a control unit configured to guide the second treatment device (200) to the received certain field location and to control the treatment mechanism.

14. The second treatment device of claim 13, wherein the second treatment device (200) is a ground robot and/or an unmanned aerial vehicle.

15. A system for treating an agricultural field, comprising:
a first treatment device (100) according to any one of claims 10 to 12; and
a second treatment device (200) according to claim 13 or 14;
wherein the second treatment device (200) is carried by the first treatment device (100).
